# EUROPEAN PATENT SPECIFICATION

(11) **EP 3 492 236 B1**
(45) Date of publication and mention of the grant of the patent: **20.10.2021**
(21) Application number: 17833828.1
(22) Date of filing: 30.05.2017
(51) Int. Cl.: B29C 49/06, B65D 41/02, B29B 11/08, B29K 67/00, B29L 31/00

(54) **SYNTHETIC RESIN PREFORM AND CONTAINER CONTAINING CONTENTS**
KUNSTHARZVORFORM UND BEHÄLTER MIT INHALT
PRÉFORME EN RÉSINE SYNTHÉTIQUE ET RÉCIPIENT COMPORTANT UN CONTENU

(30) Priority: 29.07.2016 JP 2016150456
(43) Date of publication of application: 05.06.2019
(73) Proprietor: Yoshino Kogyosho Co., Ltd., Tokyo 136-8531 (JP)
(72) Inventor: OKUYAMA Yuichi, Kanagawa 259-1103 (JP)
(74) Representative: Murgitroyd & Company
(86) International application number: PCT/JP2017/020109
(87) International publication number: WO 2018/020817

(56) References cited:
- JP-A- H07 506 323
- JP-A- H09 508 080
- JP-A- H11 292 049
- JP-A- 2003 181 906
- JP-A- 2011 219 172
- JP-A- 2015 227 169
- JP-U- S58 175 022
- US-A1- 2013 228 545

## Description

### TECHNICAL FIELD

The present disclosure relates to a synthetic resin preform having a cylindrical mouth portion provided with a male thread on an outer peripheral surface, a cylindrical body portion continuous with the mouth portion and a bottom portion closing the lower end of the body portion, the synthetic resin preform being formed into a container of a predetermined shape by blow molding; and a container containing contents formed by closing, with a cap, the mouth portion of the container in which the contents are stored.

### BACKGROUND

Conventionally, as a container to contain beverage, detergent, and toiletry such as shampoo, hand soap or the like as contents, synthetic resin containers formed by synthetic resin materials such as polyethylene (PE), polypropylene (PP), polystyrene (PS), polyethylene terephthalate (PET) are frequently used.

Such container is generally formed into a predetermined shape by blow molding a synthetic resin preform integrally provided with a cylindrical mouth portion, a cylindrical body portion continuous with the mouth portion and a bottom portion closing a lower end of the body portion as illustrated in Patent Literature 1 (PTL 1), for example. Further, contents are filled in a container formed by blow molding and the mouth portion thereof is closed by a cap, and thus a container containing contents is provided. Additionally the disclosures of JP S58 175022 U, JP 2003 181906 A, JP H09 508080 A, JP H07 506323 A, JP H11 292049 A and US 2013/228545 A1 may be helpful for understanding the present invention.

### CITATION LIST

### Patent Literature

PTL 1: JP2013-209101A

### SUMMARY

### (Technical Problem)

The conventional preform disclosed in PTL 1 includes a neck ring (support flange) between a mouth portion and a body portion, the neck ring protruding radially outward from the outer peripheral surface of the mouth portion, and when blow molding is performed, the undersurface of the neck ring is brought in abutment with the upper surface of the mold, and thus, for blow molding, the preform is held by the mold with an opening of the mouth portion facing upward. In this manner, for blow molding, the preform is held by a mold with an opening of the mouth portion facing upward, and the preform can be easily and reliably formed into a predetermined shape by blow molding.

However, for containers used for containing contents such as toiletry such as detergent, shampoo, hand soap or the like, a preform can not be provided with a neck ring for design problems. In this case, a preform cannot be held by a mold for blow molding with a mouth portion exposed out of the mold, thus blow molding cannot be adopted.

The present disclosure is to solve the above problem, and the present disclosure is to provide a synthetic resin preform capable of being molded into a container by blow molding using a mold without providing a neck ring, and a container containing contents provided with no neck ring.

### (Solution to Problem)

The present invention refers to a synthetic resin preform according to claim 1 and a container containing contents according to claim 4.

Advantageous embodiments may include features of dependent claims.

Accordingly the disclosed synthetic resin preform is a synthetic resin preform having a cylindrical mouth portion provided with a male thread on an outer peripheral surface, a cylindrical body portion continuous with the mouth portion and a bottom portion closing a lower end of the body portion, the synthetic resin preform being formed into a container of a predetermined shape by blow molding. The synthetic resin preform further includes a holding surface between the mouth portion and the body portion, the holding surface being continuous with an outer peripheral surface of the mouth portion and extending radially inward relative to the outer peripheral surface. The diameter of the outer peripheral surface of the mouth portion is the same as that of an outer peripheral surface of the body portion, a recessed groove dented radially inward relative to the outer peripheral surface of the mouth portion is provided between the mouth portion and the body portion, and a part of an inner surface of the recessed groove forms the holding surface.

In the disclosed synthetic resin preform configured in the above described manner, preferably, the recessed groove extends over the periphery between the mouth portion and the body portion.

In the disclosed synthetic resin preform configured in the above described manner, preferably, a cylindrical outer cover provided with a locking groove in an outer peripheral surface and provided also with a female thread provided on an inner peripheral surface is attached to the mouth portion with the female thread screwed with the male thread.

The disclosed container containing contents has: a synthetic resin container having a cylindrical mouth portion provided with a male thread on an outer peripheral surface, a container body portion continuous with the mouth portion and containing contents, and a holding surface provided between the mouth portion and the container body portion, continuous with an outer peripheral surface of the mouth portion and extending radially inward relative to the outer peripheral surface; a cylindrical outer cover including a locking groove in an outer peripheral surface and a female thread on an inner peripheral surface and fixed to the mouth portion with the female thread screwed with the male thread; and a cap provided with an engagement piece engaging with the locking groove in an undercut manner, the cap being attached to the outside of the outer cover to close the mouth portion.

### (Advantageous Effect)

According to the present disclosure, a synthetic resin preform that can be formed into a container by blow molding using a mold can be provided without the preform being provided with a neck ring, and a container containing contents provided with no neck ring can be also provided.

### BRIEF DESCRIPTION OF THE DRAWINGS

In the accompanying drawings:
FIG. 1 is an elevation view of a synthetic resin preform according to an embodiment of the present disclosure;
FIG. 2 is an elevation view of the preform with an outer cover attached;
FIG. 3 is a cross-sectional view illustrating a process of attaching the outer cover to the preform;
FIG. 4 is a cross-sectional view illustrating the preform attached to a blow molding mold;
FIG. 5 is a cross-sectional view illustrating the preform formed into a container by blow molding;
FIG. 6 is a cross-sectional view illustrating a state where a mouth portion of the container filled with contents is closed by a cap; and
FIG. 7 is an elevation view of a variation of the preform illustrated in FIG.1.

### DETAILED DESCRIPTION

The present disclosure will be illustrated in more detail below with reference to the drawings.

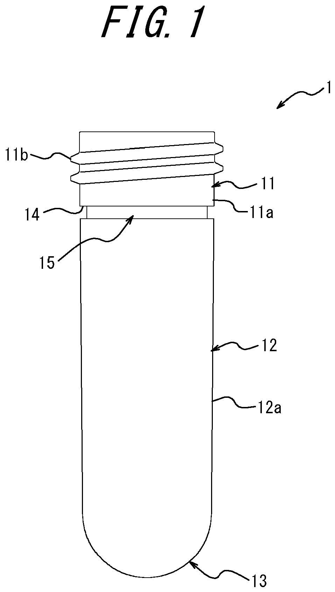

The synthetic resin preform 1 (hereinafter referred to merely as "preform 1") of an embodiment of the present disclosure illustrated in FIG. 1 is formed into a container of a predetermined shape by blow molding. In this embodiment, the preform 1 is formed by injection molding a synthetic resin material such as, for example, polyethylene (PE), polypropylene (PP), polystyrene (PS) or the like, and the case where the preform 1 is formed, by blow molding, into a container configured to contain toiletry such as shampoo, hand soap or the like as contents is illustrated.

The preform 1 is not limited to those formed by injection molding a synthetic resin material, and it may be those formed by compression molding or extrusion blow molding a synthetic resin material.

The preform 1 has a cylindrical mouth portion 11, a cylindrical body portion 12 integrally continuous with the mouth portion 11, and a hemispherical bottom portion 13 integrally continuous with the lower end (the end on the lower side in FIG. 1) of the body portion 12 and closing the lower end of the body portion 12. In this embodiment, both of the outer peripheral surface 11a of the mouth portion 11 and the outer peripheral surface 12a of the body portion 12 have axially constant outer diameters, respectively, and these diameters are the same (the same outer diameter). Further, the mouth portion 11, the body portion 12 and the bottom portion 13 are coaxially disposed, by which the entire preform 1 has a substantially test tube shape.

The outer peripheral surface 11a of the mouth portion 11 is integrally provided with a male thread 11b used to attach an outer cover 20 described later.

Further, a holding surface 14 continuous with the lower end of the outer peripheral surface 11a of the mouth portion 11 and extending radially inward relative to the outer peripheral surface 11a is provided between the mouth portion 11 and the body portion 12. The holding surface 14 is vertical to the axial direction of the mouth portion 11 and the body portion 12 and is directed to the bottom portion 13 (directed downward in FIG. 1).

In this embodiment, a recessed groove 15 dented radially inward relative to the outer peripheral surface 11a of the mouth portion 11 and the outer peripheral surface 12a of the body portion 12 is provided between the mouth portion 11 and the body portion 12, and a part of the inner surface of the recessed groove 15 forms the holding surface 14. In greater detail, the recessed groove 15 is formed into an annular shape extending over the entire circumference of the mouth portion 11 or the body portion 12 between the mouth portion 11 and the body portion 12, and the cross-section vertical to the circumferential direction has a rectangular shape. Further, out of three inner surfaces of the recessed groove 15, the surface facing downward in FIG. 1 forms the holding surface 14.

Although the boundary between the mouth portion 11 and the body portion 12 of the preform 1 is not clear, the shape of the mouth portion 11 does not change even after the preform 1 is blow molded, and thus the mouth portion 11, as it is, becomes the mouth portion of the container after molding. The body portion 12 is a portion to be axially and radially stretched by blow molding to form a container body portion of the container after molding.

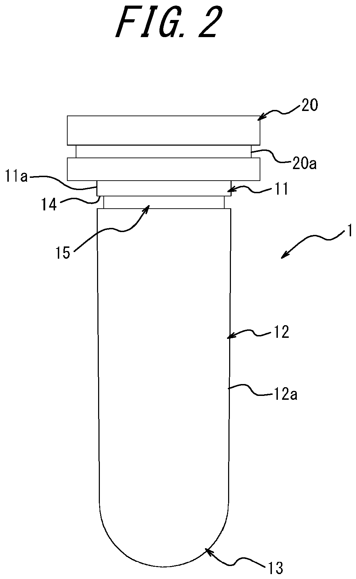

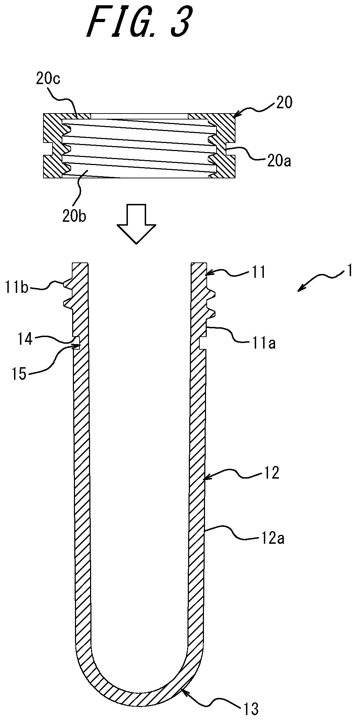

In this embodiment, in order to allow the preform 1 to be transferred easily, an outer cover 20 is attached to the mouth portion 11 as illustrated in FIG. 2. The outer cover 20 is made of synthetic resin and is formed into a cylindrical shape with a diameter larger than that of the mouth portion 11 as illustrated in FIG. 3. Further, an outer peripheral surface thereof is provided with a locking groove 20a and an inner peripheral surface thereof is provided with a female thread 20b. The locking groove 20a has a groove width that allows a chuck of a transfer machine that transfers the preform 1 to be engaged therewith (the vertical width in FIG. 1), and is formed into an annular shape extending over the entire circumference of the outer peripheral surface of the outer cover 20. On the other hand, the female thread 20b is shaped to correspond to the male thread 11b of the mouth portion 11, and the outer cover 20 can be attached to the mouth portion 11 by screwing the female thread 20b with the male thread 11b. A flange 20c facing inward and having an inner diameter that is the same as that of the mouth portion 11 is integrally provided on the upper end of the outer cover 20, and when the female thread 20b is screwed into the male thread 11b until the undersurface of the flange 20c is in abutment with the opening end of the mouth portion 11, the outer cover 20 can be fixed to an axial predetermined position relative to the mouth portion 11.

Next, a process of forming the preform 1 configured in the above described manner into a container of a predetermined shape by blow molding (a blow molding method) is described.

First, as illustrated in FIG. 3, the outer cover 20 is attached to the preform 1.

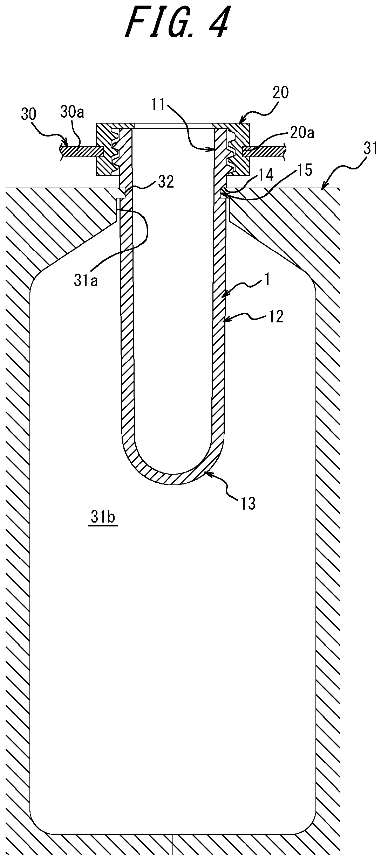

Next, as illustrated in FIG. 4, the locking groove 20a of the outer cover 20 is engaged with a chuck 30a of a transfer machine 30. By using the transfer machine 30, the preform 1 is transferred to a mold 31 for blow molding and is attached to the mold 31.

Preferably, before the preform 1 is attached to the mold 31, the body portion 12 and the bottom portion 13 are previously heated, by a heater or the like, up to a predetermined temperature at which a stretch effect is expressed. In this case, the preform 1 may be heated before the outer cover 20 is attached to the mouth portion 11 or after the outer cover 20 is attached to the mouth portion 11. Moreover, in consideration of productivity, the preform 1 may be attached to the mold 31 at a predetermined temperature by what is called a hot preform method in which the residual heat generated when the preform 1 is molded by injection molding or extrusion molding or the like is used.

An opening 31a used for disposing the preform 1 is provided on the upper surface of the mold 31, and the preform 1 is attached to the mold 31 with its mouth portion 11 protruding upward and outward from the opening 31a and with the body portion 12 and the bottom portion 13 disposed in the cavity 31b of the mold 31. The cavity 31b has a bottle shape corresponding to a container after molding. Further, although not illustrated in detail, the mold 31 can be opened right and left, and a container after molding can be ejected from the mold 31 by opening the mold 31.

In this case, the inner peripheral edge of the opening 31a of the mold 31 is provided with a protrusion 32. The protrusion 32 is formed into a rib shape with a thickness equal to or smaller than the groove width of the recessed groove 15, and is provided annularly over the entire circumference of the opening 31a. Further, the protrusion 32 is disposed in the recessed groove 15 of the preform 1, and the holding surface 14 is supported by the upper surface of the protrusion 32, which allows the preform 1 to be held by the mold 31.

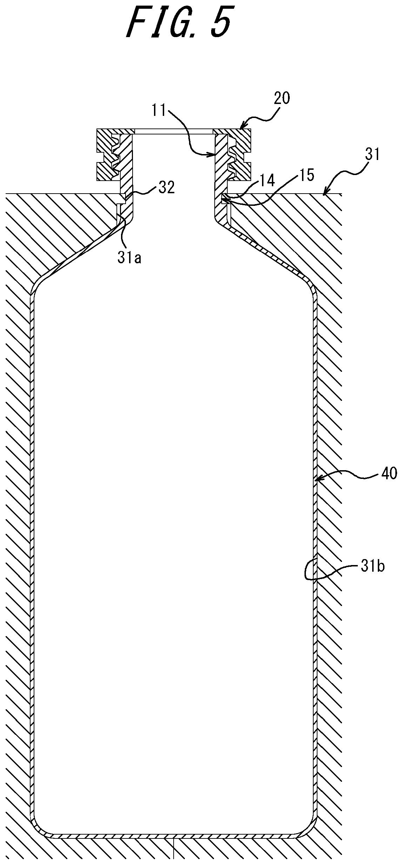

Next, a nozzle (not illustrated) disposed on top of the mold 31 is lowered and is inserted into the mouth portion 11 of the preform 1. Further, the compressed air is supplied into the preform 1 through the nozzle to form the preform 1 into a container of a predetermined shape. In this manner, the preform 1 disposed in the mold 31 is blow molded, and as illustrated in FIG. 5, the body portion 12 and bottom portion 13 of the preform 1 is formed into a predetermined shape conforming to the inner surface of the cavity 31b. Thus a container 40 can be manufactured.

Further, the preform 1 is held in the mold 31 by the holding surface 14 that is supported by the top surface of the protrusion 32. Thus, even if the compressed air is supplied to the mouth portion 11 from above by blow molding, the preform 1 is prevented from being dropped off from the mold 31 due to the supply pressure during blow molding.

During blow molding, the body portion 12 of the preform 1 may be stretched in the longitudinal direction (axial direction) by the stretching rod that moves forward through the nozzle. With the stretching rod, the body portion 12 of the preform 1 can be radially stretched by the compressed air while being axially stretched by the stretching rod. In this case, preferably, the axial stretch of the body portion 12 by the stretching rod is performed before the compressed air is supplied into the body portion 12. However, it may be performed simultaneously with the supply of the compressed air into the body portion 12.

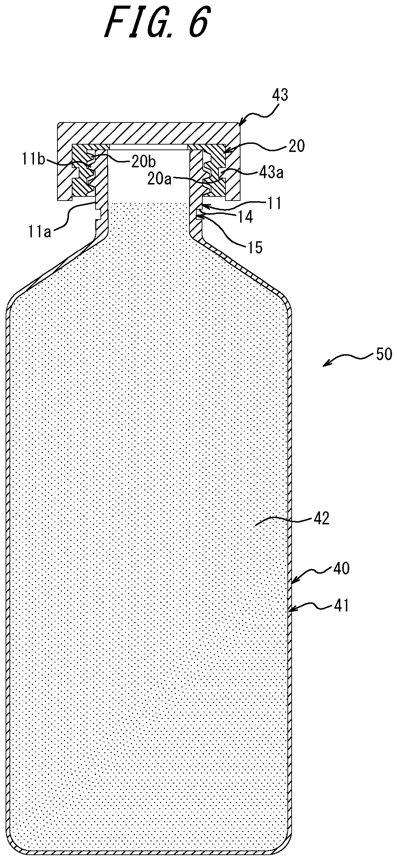

When the blow molding is finished, the nozzle is moved upward to be detached from the mouth portion 11, and subsequently the mold 31 is opened right and left. Further, the chuck 30a of the transfer machine 30 is engaged again with the locking groove 20a of the outer cover 20. Then the container 40 after molding is ejected from the mold 31 by the transfer machine 30 and the container 40 is transferred to the contents filling process. Further, as illustrated in FIG. 6, contents 42 is filled from the mouth portion 11 of the container 40 into the container body portion 41 formed by blow molding the body portion 12 and the bottom portion 13 of the preform 1, and after that a topped cylindrical cap 43 is mounted to the outside of the outer cover 20. Thus, an engagement piece 43a protruding from the inner surface of the peripheral wall of the cap 43 is engaged with the locking groove 20a of the outer cover 20 in an undercut manner to close the mouth portion 11 by the cap 43. At this time, the cap 43 may be configured such that it is fixed to the outer cover 20 with detent mechanism not illustrated. By fixing the cap 43 to the outer cover 20 with detent mechanism, the cap 43 can rotate with the outer cover 20, which allows the mouth portion 11 to be opened and closed by rotating the cap 43.

As described above, the container 40 is formed by blow molding the preform 1 and after the container 40 is filled with the contents 42, the cap 43 is mounted to the outer cover 20. As a result, a container containing contents 50 can be manufactured, the container containing contents 50 having the synthetic resin container 40 including the cylindrical mouth portion 11 provided with the male thread 11b on the outer peripheral surface 11a, the container body portion 41 continuous with the mouth portion 11 and containing the contents 42, and the holding surface 14 provided between the mouth portion 11 and the container body portion 41, continuous with the outer peripheral surface 11a of the mouth portion 11 and extending radially inward relative to the outer peripheral surface 11a; a cylindrical outer cover 20 including the locking groove 20a in the outer peripheral surface and the female thread 20b on the inner circumferential surface, and fixed to the mouth portion 11 with the female thread 20b screwed with the male thread 11b; and the cap 43 provided with the engagement piece 43a engaging with the locking groove 20a in an undercut manner, the cap being attached to the outside of the outer cover 20 to close the mouth portion 11.

As described above, the disclosed preform 1 is provided with, between the mouth portion 11 and the body portion 12, the holding surface 14 extending radially inward from the outer peripheral surface 11a of the mouth portion 11, and the protrusion 32 of the mold 31 is engaged with the holding surface 14 to hold the preform 1 in the mold 31 such that the preform 1 is prevented from dropping off. Thus, the preform 1 can be easily and reliably formed into the container 40 by blow molding without being provided with a neck ring, Further, instead of the neck ring, the preform 1 is configured to include the recessed groove 15, and as a result of this, the preform 1 and the container 40 are made lighter in weight and the portion below the recessed groove 15 can be easily stretched during blow molding. Moreover, by using the container 40 formed by blow molding the preform 1, a container containing contents 50 including no neck ring can be provided.

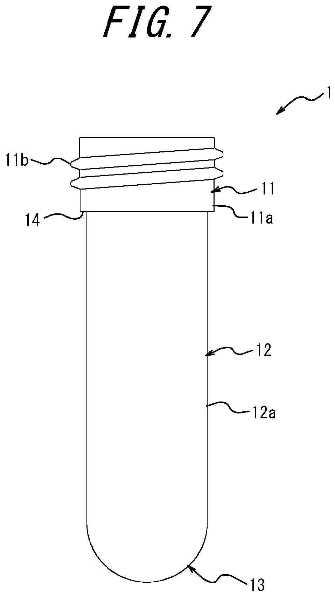

FIG. 7 is an elevation view of a variation of the preform illustrated in FIG.1. In FIG. 7, the portions corresponding to the aforementioned portions are assigned with the same reference signs.

In the preform 1 illustrated in FIG. 1, the diameter of the outer peripheral surface 11a of the mouth portion 11 is the same as that of the outer peripheral surface 12a of the body portion 12. Further, the recessed groove 15 dented radially inward relative to the outer peripheral surface 11a of the mouth portion 11 is provided between the mouth portion 11 and the body portion 12 such that the holding surface 14 is formed by a part of the inner surface of the recessed groove 15.

On the other hand, in the variation of the preform 1 illustrated in FIG. 7, the diameter of the outer peripheral surface 11a of the mouth portion 11 is larger than that of the outer peripheral surface 12a of the body portion 12, and a step surface between the mouth portion 11 and the body portion 12 is provided as the holding surface 14. In other words, the holding surface 14 is configured to form the step surface. The step surface is vertical to the axial direction of the mouth portion 11 and of the body portion 12, is continuous with the outer peripheral surface 11a of the mouth portion 11 at the outer peripheral edge thereof and is continuous with the outer peripheral surface 12a of the body portion 12 at the inner peripheral edge thereof.

According to the above described configuration, without providing the opening 31a of the mold 31 with the protrusion 32 of a shape corresponding to the recessed groove 15, the holding surface 14 is supported by the opening edge of the opening 31a to hold the preform 1 in the mold 31. Thus it is not necessary to consider the strength or the like of the protrusion 32, and the degree of freedom in the design of the mold 31 can be enhanced.

The present disclosure is not limited to the above described embodiment, and may be changed in various manners without departing from the gist thereof.

For example, in the above described embodiment, the preform 1 is made of synthetic resin such as polyethylene (PE), polypropylene (PP), polystyrene (PS) or the like. But it is not limited thereto, and the preform 1 may be made of other synthetic resin materials.

Further, in the above described embodiment, although the case where the preform 1 is formed, by blow molding, into a container 40 that contains toiletry such as shampoo, hand soap or the like as contents is illustrated, it is not limited thereto, and the preform 1 may be formed into a container that contains other contents.

Moreover, in the above described embodiment, although the holding surface 14 or the recessed groove 15 is formed into an annular shape extending over the entire circumference of the mouth portion 11 or the body portion 12, it is not limited thereto, and it may be formed into a shape extending over only a portion of the circumference of the mouth portion 11 or the body portion 12. In this case, the protrusion 32 of the mold 31 and the opening edge of the opening 31a are also formed into a shape corresponding to the holding surface 14 or the recessed groove 15.

Furthermore, in the above described embodiment, although the preform 1 is blow molded by the compressed air as a pressurizing medium, it is not limited thereto, and the preform 1 may be molded by liquid blow molding in which liquid is used as a pressurizing medium. In this case, preferably, as a liquid supplied to the preform 1 during the liquid blow molding, contents filled finally into the container 40 as a product is used. As a result of this, the process of filling the contents in the container 40 after molding is omitted, and thus the productivity can be improved.

Moreover, in the above described embodiment, although the container 40 is transferred to the contents filling process with the outer cover 20 attached to the mouth portion 11, and after the container 40 is filled with contents, the cap 43 is attached to the outside of the outer cover 20 attached to the mouth portion 11 to close the mouth portion 11, it is possible that, after the container 40 is transferred to the contents filling process with the outer cover 20 attached to the mouth portion 11 and the container 40 is filled with the contents, the outer cover 20 is detached from the mouth portion 11 and a screw cap is directly attached to the mouth portion 11 to close the mouth portion 11. Alternatively, without the outer cover 20 being attached to the mouth portion 11, the preform 1 may be transferred with the mouth portion 11 being directly held by the chuck 30a of the transfer machine 30.

Furthermore, in the above described embodiment, although the preform 1 is illustrated as a single layer structure formed only of one kind of synthetic resin material, it is not limited thereto, and the preform 1 may have a lamination structure formed by laminating some kinds of synthetic resin materials. In this case, although the preform 1 may be formed by adhering multiple resin layers to each other, other than that the preform 1 may be formed into a laminated structure in which an outer layer and an inner layer are made respectively of materials different from each other so that they don't adhere to each other or may be formed into a laminated structure in which an axial zonal adhesive layer is provided between an outer layer and an inner layer. In this manner, when the preform 1 is formed into a laminated structure in which an outer layer and an inner layer are not adhered to each other, the preform 1 can be formed into a delaminated container by blow molding. The preform 1 of laminated structure is not limited to the above described structures, and a variety of layer structures can be adopted.

### REFERENCE SIGNS LIST

- 1: Synthetic resin preform
- 11: Mouth portion
- 11a: Outer peripheral surface
- 11b: Male thread
- 12: Body portion
- 12a: Outer peripheral surface
- 13: Bottom portion
- 14: Holding surface
- 15: Recessed groove
- 20: Outer cover
- 20a: Locking groove
- 20b: Female thread
- 20c: Flange
- 30: Transfer machine
- 30a: Chuck
- 31: Mold
- 31a: Opening
- 31b: Cavity
- 32: Protrusion
- 40: Container
- 41: Container body portion
- 42: Contents
- 43: Cap
- 43a: Engagement piece
- 50: Container containing contents

## Claims

1. A synthetic resin preform (1), comprising a cylindrical mouth portion (11) provided with a male thread (11b) on an outer peripheral surface (11a), a cylindrical body portion (12) continuous with the mouth portion (11), and a bottom portion (13) configured to close a lower end of the body portion (12), and formed into a container (40) of a predetermined shape by blow molding, wherein
the synthetic resin preform (1) further comprising, between the mouth portion (11) and the body portion (12), a holding surface (14) continuous with an outer peripheral surface (11a) of the mouth portion (11) and extending radially inward relative to the outer peripheral surface (11a),
**characterized by** that
a diameter of the outer peripheral surface (11a) of the mouth portion (11) is the same as that of an outer peripheral surface (12a) of the body portion (12);
a recessed groove (15) that is dented radially inward relative to the outer peripheral surface (11a) of the mouth portion (11) is provided between the mouth portion (11) and the body portion (129; and
a part of an inner surface of the recessed groove (15) forms the holding surface (14).

2. The synthetic resin preform (1) according to claim 1, wherein the recessed groove (15) extends over an entire circumference between the mouth portion (11) and the body portion (12).

3. The synthetic resin preform (1) according to claim 1 or claim 2, wherein a cylindrical outer cover (20) including a locking groove (20a) in the outer peripheral surface and a female thread (20b) on an inner peripheral surface is attached to the mouth portion (11) with the female thread screwed (20b) with the male thread (11b).

4. A container (50) containing contents (42), made from a preform according to claim 1, comprising:
a cylindrical outer cover (20) including a locking groove (20a) in an outer peripheral surface and a female thread (20b) on an inner peripheral surface and fixed to the mouth portion (11) with the female thread (20b) screwed with the male thread (11b); and
a cap (43) provided with an engagement piece (43a) engaging with the locking groove (20a) in an undercut manner, the cap (43) being attached to outside of the outer cover (20) to close the mouth portion (11).

## Patentansprüche

1. Ein Kunstharzvorformling (1), beinhaltend einen zylindrischen Mündungsabschnitt (11), der mit einem Außengewinde (11b) auf einer äußeren Umfangsoberfläche (11a) bereitgestellt ist, einen zylindrischen Körperabschnitt (12), der mit dem Mündungsabschnitt (11) kontinuierlich ist, und einen Bodenabschnitt (13), der zum Schließen eines unteren Endes des Körperabschnitts (12) konfiguriert ist und durch Blasformen zu einem Behälter (40) einer vorbestimmten Gestalt geformt wird, wobei der Kunstharzvorformling (1) ferner zwischen dem Mündungsabschnitt (11) und dem Körperabschnitt (12) eine Haltefläche (14) beinhaltet, die mit einer äußeren Umfangsoberfläche (11a) des Mündungsabschnitts (11) kontinuierlich ist und sich relativ zu der äußeren Umfangsoberfläche (11a) radial nach innen erstreckt,
**dadurch gekennzeichnet, dass**
ein Durchmesser der äußeren Umfangsoberfläche (11a) des Mündungsabschnitts (11) der gleiche ist wie der einer äußeren Umfangsoberfläche (12a) des Körperabschnitts (12);
eine vertiefte Nut (15), die relativ zu der äußeren Umfangsoberfläche (11a) des Mündungsabschnitts (11) radial nach innen zurückgesetzt ist, zwischen dem Mündungsabschnitt (11) und dem Körperabschnitt (129) bereitgestellt ist; und
ein Teil einer inneren Oberfläche der vertieften Nut (15) die Haltefläche (14) bildet.

2. Kunstharzvorformling (1) gemäß Anspruch 1, wobei sich die vertiefte Nut (15) über einen gesamten Umkreis zwischen dem Mündungsabschnitt (11) und dem Körperabschnitt (12) erstreckt.

3. Kunstharzvorformling (1) gemäß Anspruch 1 oder Anspruch 2, wobei eine zylindrische äußere Abdeckung (20), die eine Verriegelungsnut (20a) in der äußeren Umfangsoberfläche und ein Innengewinde (20b) auf einer inneren Umfangsoberfläche umfasst, an dem Mündungsabschnitt (11) angebracht ist, wobei das Innengewinde (20b) mit dem Außengewinde (11b) verschraubt ist.

4. Ein Behälter (50), der Inhalt (42) enthält, hergestellt aus einem Vorformling gemäß Anspruch 1, beinhaltend:
eine zylindrische äußere Abdeckung (20), die eine Verriegelungsnut (20a) in einer äußeren Umfangsoberfläche und ein Innengewinde (20b) auf einer inneren Umfangsoberfläche umfasst und an dem Mündungsabschnitt (11) befestigt ist, wobei das Innengewinde (20b) mit dem Außengewinde (11b) verschraubt ist; und
eine Kappe (43), die mit einem Eingriffsstück (43a) versehen ist, das sich mit der Verriegelungsnut (20a) auf eine hinterschnittene Weise im Eingriff befindet, wobei die Kappe (43) an der Außenseite der äußeren Abdeckung (20) angebracht ist, um den Mündungsabschnitt (11) zu schließen.

## Revendications

1. Une préforme en résine synthétique (1), comprenant une portion de goulot cylindrique (11) pourvue d'un filetage mâle (11b) sur une surface périphérique externe (11a), une portion de corps cylindrique (12) continue par rapport à la portion de goulot (11), et une portion de fond (13) configurée pour fermer une extrémité inférieure de la portion de corps (12), et formée en un récipient (40) d'une conformation prédéterminée par moulage par soufflage, où
la préforme en résine synthétique (1) comprenant en outre, entre la portion de goulot (11) et la portion de corps (12), une surface de retenue (14) continue par rapport à une surface périphérique externe (11a) de la portion de goulot (11) et s'étendant radialement vers l'intérieur relativement à la surface périphérique externe (11a), **caractérisée par le fait**
**qu'**un diamètre de la surface périphérique externe (11a) de la portion de goulot (11) est le même que celui d'une surface périphérique externe (12a) de la portion de corps (12) ;
**qu'**une rainure en renfoncement (15) qui est enfoncée radialement vers l'intérieur relativement à la surface périphérique externe (11a) de la portion de goulot (11) est fournie entre la portion de goulot (11) et la portion de corps (129 ; et
**qu'**une partie d'une surface interne de la rainure en renfoncement (15) forme la surface de retenue (14).

2. La préforme en résine synthétique (1) selon la revendication 1, où la rainure en renfoncement (15) s'étend sur toute une circonférence entre la portion de goulot (11) et la portion de corps (12).

3. La préforme en résine synthétique (1) selon la revendication 1 ou la revendication 2, où un recouvrement externe cylindrique (20) incluant une rainure de verrouillage (20a) dans la surface périphérique externe et un filetage femelle (20b) sur une surface périphérique interne est joint à la portion de goulot (11), le filetage femelle étant vissé (20b) sur le filetage mâle (11b).

4. Un récipient (50) contenant des contenus (42), réalisé à partir d'une préforme selon la revendication 1, comprenant :
un recouvrement externe cylindrique (20) incluant une rainure de verrouillage (20a) dans une surface périphérique externe et un filetage femelle (20b) sur une surface périphérique interne et fixé sur la portion de goulot (11), le filetage femelle étant (20b) vissé sur le filetage mâle (11b) ; et
un bouchon (43) pourvu d'une pièce de mise en prise (43a) se mettant en prise avec la rainure de verrouillage (20a) d'une manière dégagée, le bouchon (43) étant joint à l'extérieur du recouvrement externe (20) afin de fermer la portion de goulot (11).
